# EUROPEAN PATENT APPLICATION

(11) **EP 4 637 096 A1**
(43) Date of publication of application: **22.10.2025**
(21) Application number: 23910634.7
(22) Date of filing: 26.12.2023
(51) Int. Cl.: H04L 41/0803

(54) **NETWORK ADDRESS TRANSLATION GATEWAY CONFIGURATION METHOD AND CLOUD MANAGEMENT PLATFORM**

(30) Priority: 28.12.2022 CN 202211700326; 03.01.2023 CN 202310003031
(71) Applicant: Huawei Cloud Computing Technologies Co., Ltd., Guiyang, Guizhou 550025 (CN)
(72) Inventor: ZHANG, Rui, Shenzhen, Guangdong 518129 (CN); LIU, Xiaolong, Shenzhen, Guangdong 518129 (CN); GAO, Zhonghua, Shenzhen, Guangdong 518129 (CN); CAI, Ning, Shenzhen, Guangdong 518129 (CN)
(74) Representative: Goddar, Heinz J.
(86) International application number: PCT/CN2023/142033
(87) International publication number: WO 2024/140711

(57) **Abstract**

This application provides a method for configuring a network address translation NAT gateway based on a public cloud service. The method includes: A cloud management platform obtains NAT gateway creation information that is input by a tenant, where the NAT gateway creation information carries an identifier of a first VPC. The cloud management platform creates the NAT gateway in the first VPC based on the NAT gateway creation information. The cloud management platform obtains configuration information that is input by the tenant and applied to the NAT gateway, where the configuration information includes an identifier of a second VPC and a first NAT rule. The cloud management platform sets, based on the identifier of the second VPC, the NAT gateway to be connected to the second VPC, and sends the first NAT rule to the NAT gateway, where the first NAT rule is used to indicate the NAT gateway to: bind a first network segment in the first VPC to a first elastic IP address EIP; and bind the first network segment in the first VPC to a first transit private IP address. Through the foregoing solutions, a public NAT gateway function and a private NAT gateway function are fused and provided for the tenant as a single cloud service, thereby reducing development costs and operation and maintenance costs of a cloud infrastructure provider.

## Description

### TECHNICAL FIELD

This application relates to the field of cloud technologies, and in particular, to a method for configuring a network address translation gateway based on a public cloud service and a cloud management platform.

### BACKGROUND

As an emerging industry in recent years, cloud computing has attracted wide attention from scientific research and industry communities. The cloud computing has emerged worldwide. With a flexible, efficient, low-cost, and energy-saving operation mode, the cloud computing has become an important engine for promoting green development of the industry and a new business platform in the 21^{st} century. With development of a public cloud, an increasing quantity of cloud instances are deployed on a virtual private cloud (Virtual Private Cloud, VPC). Applications are configured in the cloud instances and need to access a internet and other VPCs.

In a conventional technology, in two scenarios where an application in a VPC of a public cloud accesses a public network and an application accesses another VPC, different network address translation (Network Address Translation, NAT) gateways need to be created, and a tenant needs to perform network configuration at different NAT gateways for different scenarios. This causes inconvenience.

### SUMMARY

To solve a problem in a conventional technology, this application provides a method for configuring a network address translation gateway and a cloud management platform, to fuse a public NAT gateway function and a private NAT gateway function, and provide a fused function for a customer as a single cloud service, thereby reducing development costs and operation and maintenance costs of a cloud infrastructure provider.

According to a first aspect, this application provides a method for configuring a network address translation NAT gateway based on a public cloud service. The method is applied to a cloud management platform, the cloud management platform is configured to manage a network infrastructure that provides the public cloud service, the network infrastructure includes a first VPC and a second VPC, and the method includes:

The cloud management platform obtains NAT gateway creation information that is input by a tenant, where the NAT gateway creation information carries an identifier of the first VPC.

The cloud management platform creates the NAT gateway in the first VPC based on the NAT gateway creation information.

The cloud management platform obtains configuration information that is input by the tenant and applied to the NAT gateway, where the configuration information includes an identifier of the second VPC and a first NAT rule.

The cloud management platform sets, based on the identifier of the second VPC, the NAT gateway to be connected to the second VPC, and sends the first NAT rule to the NAT gateway, where the first NAT rule is used to indicate the NAT gateway to:
bind a first network segment in the first VPC to a first elastic IP address EIP; when a packet from the first network segment and having a destination IP address being a first public IP address is received, modify a source IP address of the packet to the first EIP, and send the modified packet to a public network; and when a packet having a source IP address being the first public IP address and having a destination IP address being the first EIP is received, modify the destination IP address of the packet to a private IP address in the first network segment, and send the modified packet to the first network segment of the first VPC; and
bind the first network segment in the first VPC to a first transit private IP address; when a packet from the first network segment and having a destination IP address being a private IP address in a second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the first transit private IP address to the private IP address in the first network segment, and send the modified packet to the first network segment of the first VPC.

Therefore, this solution enables a NAT gateway to support access between a public network and a VPC. A private IP address of a cloud instance in the same VPC network segment may be bound to both an EIP and a transit private IP address at the NAT gateway. The NAT gateway automatically determines how to perform address translation based on a destination IP address of a packet sent by the cloud instance, thereby simplifying a configuration process and optimizing tenant experience.

In a possible implementation of the first aspect, the first NAT rule is specifically used to indicate the NAT gateway to:
when a first packet having a source IP address being a first private IP address of the first network segment and having a destination IP address being the first public IP address is received, modify the source IP address of the first packet from the first private IP address to the first EIP, modify a source port of the first packet from a first original port to a first allocated port, and send the modified first packet to the public network; and when a second packet having a source IP address being the first public IP address, having a destination IP address being the first EIP, and having a destination port being the first allocated port is received, modify the destination IP address of the second packet to the first private IP address, modify the destination port to the first original port, and send the modified second packet to the first private IP address of the first VPC; and
when a third packet from a second private IP address of the first network segment and having a destination IP address being the first public IP address is received, modify a source IP address of the third packet from the second private IP address to the first EIP, modify a source port of the third packet from a second original port to a second allocated port, and send the modified third packet to the public network; and when a fourth packet having a source IP address being the first public IP address, having a destination IP address being the first EIP, and having a destination port being the second allocated port is received, modify the destination IP address of the fourth packet to the second private IP address, modify the destination port to the second original port, and send the modified fourth packet to the second private IP address of the first VPC.

In a possible implementation of the first aspect, the first NAT rule is specifically used to indicate the NAT gateway to:
when a fifth packet from the first private IP address of the first network segment and having a destination IP address being a third private IP address of the second network segment of the second VPC connected to the NAT gateway is received, modify a source IP address of the fifth packet from the first private IP address to the first transit private IP address, modify a source port of the fifth packet from a third original port to a third allocated port, and send the modified fifth packet to the third private IP address of the second network segment of the second VPC; and when a sixth packet having a source IP address being the first public IP address, having a destination IP address being the first EIP, and having a destination port being the third allocated port is received, modify the destination IP address of the sixth packet to the first private IP address, modify the destination port to the third original port, and send the modified sixth packet to the first private IP address of the first VPC; and
when a seventh packet from the second private IP address of the first network segment and having a destination IP address being the third private IP address of the second network segment of the second VPC connected to the NAT gateway is received, modify a source IP address of the seventh packet from the second private IP address to the first transit private IP address, modify a source port of the seventh packet from a fourth original port to a fourth allocated port, and send the modified seventh packet to the third private IP address of the second network segment of the second VPC; and when an eighth packet having a source IP address being the third private IP address, having a destination IP address being the first transit private IP address, and having a destination port being the fourth allocated port is received, modify the destination IP address of the eighth packet to the second private IP address, modify the destination port to the fourth original port, and send the modified eighth packet to the second private IP address of the first VPC.

In a possible implementation of the first aspect, the configuration information further includes a second NAT rule, and the method further includes:

The cloud management platform sets the first VPC to establish a connection to a third VPC.

The cloud management platform sets a first routing rule in the third VPC, where the first routing rule is used to indicate a router of the third VPC to forward, to the NAT gateway in the first VPC, a packet having a destination IP address being the first public IP address.

The cloud management platform sets a second routing rule in the first VPC, where the second routing rule is used to indicate a router of the first VPC to forward, to the second VPC, a packet having a destination address being a third network segment in the third VPC.

The cloud management platform sends the second NAT rule to the NAT gateway, where the second NAT rule is used to indicate the NAT gateway to:
bind the third network segment in the third VPC to the first EIP; when a packet from the third network segment and having a destination IP address being the first public IP address is received, modify a source IP address of the packet to the first EIP, and send the modified packet to the public network; and when a packet having a source IP address being the first public IP address and having a destination IP address being the first EIP is received, modify the destination IP address of the packet to a private IP address in the third network segment, and send the modified packet to the first VPC, where the router of the first VPC forwards the modified packet to the second VPC according to the second routing rule.

In a possible implementation of the first aspect, the configuration information further includes a third NAT rule, and the method further includes:

The cloud management platform sets a third routing rule in the third VPC, where the third routing rule is used to indicate the router of the third VPC to forward, to the NAT gateway in the first VPC, a packet having a destination IP address being the second network segment of the second VPC connected to the NAT gateway.

The cloud management platform sets a fourth routing rule in the first VPC, where the fourth routing rule is used to indicate a router of the first VPC to forward, to the third VPC, a packet having a destination address being a third network segment in the third VPC.

The cloud management platform sends the third NAT rule to the NAT gateway, where the third NAT rule is used to indicate the NAT gateway to:
bind the third network segment in the third VPC to the first transit private IP address; when a packet from the third network segment and having a destination IP address being the private IP address in the second network segment of the second VPC connected to the NAT gateway is received, modify a source IP address of the packet to the first transit private IP address, and send the modified packet to the second VPC; and when a packet having a source IP address being the private IP address in the second network segment of the second VPC and having a destination IP address being the first transit private IP address is received, modify the destination IP address of the packet to the private IP address in the third network segment, and send the modified packet to the third VPC, where the router of the third VPC forwards the modified packet to the second VPC according to the third routing rule.

In a possible implementation of the first aspect, the first NAT rule is further used to indicate the NAT gateway to:
bind a fourth network segment in the first VPC to a second EIP; when a packet from the fourth network segment and having a destination IP address being a second public IP address is received, modify a source IP address of the packet to the second EIP, and send the modified packet to the public network; and when a packet having a source IP address being the second public IP address and having a destination IP address being the second EIP is received, modify the destination IP address of the packet to a private IP address in the fourth network segment, and send the modified packet to the fourth network segment of the first VPC.

In a possible implementation of the first aspect, the first NAT rule is further used to indicate the NAT gateway to: bind the fourth network segment in the first VPC to a second transit private IP address; when a packet from the fourth network segment and having a destination IP address being the private IP address in the second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the second transit private IP address to the private IP address in the fourth network segment, and send the modified packet to the fourth network segment of the first VPC.

In a possible implementation of the first aspect, the method further includes:
The cloud management platform sets a remote access gateway in the second VPC, where the remote access gateway is provided with a preset private IP address in the second network segment of the second VPC.

The cloud management platform sets the remote access gateway to be connected to an on-premises internet data center.

According to a second aspect, this application provides a cloud management platform. The cloud management platform is configured to manage a network infrastructure that provides a public cloud service, the network infrastructure includes a first VPC and a second VPC, and the cloud management platform includes:
an information obtaining module, configured to obtain NAT gateway creation information that is input by a tenant, where the NAT gateway creation information carries an identifier of the first VPC;
a gateway creating module, configured to create the NAT gateway in the first VPC based on the NAT gateway creation information, where
the information obtaining module is further configured to obtain configuration information that is input by the tenant and applied to the NAT gateway, where the configuration information includes an identifier of the second VPC and a first NAT rule; and
a gateway configuration module, configured to set, based on the identifier of the second VPC, the NAT gateway to be connected to the second VPC, and send the first NAT rule to the NAT gateway, where the first NAT rule is used to indicate the NAT gateway to:
   bind a first network segment in the first VPC to a first elastic IP address EIP; when a packet from the first network segment and having a destination IP address being a first public IP address is received, modify a source IP address of the packet to the first EIP, and send the modified packet to a public network; and when a packet having a source IP address being the first public IP address and having a destination IP address being the first EIP is received, modify the destination IP address of the packet to a private IP address in the first network segment, and send the modified packet to the first network segment of the first VPC; and
   bind the first network segment in the first VPC to a first transit private IP address; when a packet from the first network segment and having a destination IP address being a private IP address in a second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the first transit private IP address to the private IP address in the first network segment, and send the modified packet to the first network segment of the first VPC.

In a possible implementation of the second aspect, the first NAT rule is specifically used to indicate the NAT gateway to:
when a first packet having a source IP address being a first private IP address of the first network segment and having a destination IP address being the first public IP address is received, modify the source IP address of the first packet from the first private IP address to the first EIP, modify a source port of the first packet from a first original port to a first allocated port, and send the modified first packet to the public network; and when a second packet having a source IP address being the first public IP address, having a destination IP address being the first EIP, and having a destination port being the first allocated port is received, modify the destination IP address of the second packet to the first private IP address, modify the destination port to the first original port, and send the modified second packet to the first private IP address of the first VPC; and
when a third packet from a second private IP address of the first network segment and having a destination IP address being the first public IP address is received, modify a source IP address of the third packet from the second private IP address to the first EIP, modify a source port of the third packet from a second original port to a second allocated port, and send the modified third packet to the public network; and when a fourth packet having a source IP address being the first public IP address, having a destination IP address being the first EIP, and having a destination port being the second allocated port is received, modify the destination IP address of the fourth packet to the second private IP address, modify the destination port to the second original port, and send the modified fourth packet to the second private IP address of the first VPC.

In a possible implementation of the second aspect, the first NAT rule is specifically used to indicate the NAT gateway to:
when a fifth packet from the first private IP address of the first network segment and having a destination IP address being a third private IP address of the second network segment of the second VPC connected to the NAT gateway is received, modify a source IP address of the fifth packet from the first private IP address to the first transit private IP address, modify a source port of the fifth packet from a third original port to a third allocated port, and send the modified fifth packet to the third private IP address of the second network segment of the second VPC; and when a sixth packet having a source IP address being the first public IP address, having a destination IP address being the first EIP, and having a destination port being the third allocated port is received, modify the destination IP address of the sixth packet to the first private IP address, modify the destination port to the third original port, and send the modified sixth packet to the first private IP address of the first VPC; and
when a seventh packet from the second private IP address of the first network segment and having a destination IP address being the third private IP address of the second network segment of the second VPC connected to the NAT gateway is received, modify a source IP address of the seventh packet from the second private IP address to the first transit private IP address, modify a source port of the seventh packet from a fourth original port to a fourth allocated port, and send the modified seventh packet to the third private IP address of the second network segment of the second VPC; and when an eighth packet having a source IP address being the third private IP address, having a destination IP address being the first transit private IP address, and having a destination port being the fourth allocated port is received, modify the destination IP address of the eighth packet to the second private IP address, modify the destination port to the fourth original port, and send the modified eighth packet to the second private IP address of the first VPC.

In a possible implementation of the second aspect, the configuration information further includes a second NAT rule, and the cloud management platform further includes:
a connection establishing module, configured to set the first VPC to establish a connection to a third VPC; and
a routing rule setting module, configured to set a first routing rule in the third VPC, where the first routing rule is used to indicate a router of the third VPC to forward, to the NAT gateway in the first VPC, a packet having a destination IP address being the first public IP address; and set a second routing rule in the first VPC, where the second routing rule is used to indicate a router of the first VPC to forward, to the second VPC, a packet having a destination address being a third network segment in the third VPC, where
the gateway configuration module is configured to send the second NAT rule to the NAT gateway, where the second NAT rule is used to indicate the NAT gateway to:
   bind the third network segment in the third VPC to the first EIP; when a packet from the third network segment and having a destination IP address being the first public IP address is received, modify a source IP address of the packet to the first EIP, and send the modified packet to the public network; and when a packet having a source IP address being the first public IP address and having a destination IP address being the first EIP is received, modify the destination IP address of the packet to a private IP address in the third network segment, and send the modified packet to the first VPC, where the router of the first VPC forwards the modified packet to the second VPC according to the second routing rule.

In a possible implementation of the second aspect, the configuration information further includes a third NAT rule.

The routing rule setting module is configured to set a third routing rule in the third VPC, where the third routing rule is used to indicate the router of the third VPC to forward, to the NAT gateway in the first VPC, a packet having a destination IP address being the second network segment of the second VPC connected to the NAT gateway.

The routing rule setting module is further configured to set a fourth routing rule in the first VPC, where the fourth routing rule is used to indicate a router of the first VPC to forward, to the third VPC, a packet having a destination address being a third network segment in the third VPC.

The gateway configuration module is configured to send the third NAT rule to the NAT gateway, where the third NAT rule is used to indicate the NAT gateway to:
bind the third network segment in the third VPC to the first transit private IP address; when a packet from the third network segment and having a destination IP address being the private IP address in the second network segment of the second VPC connected to the NAT gateway is received, modify a source IP address of the packet to the first transit private IP address, and send the modified packet to the second VPC; and when a packet having a source IP address being the private IP address in the second network segment of the second VPC and having a destination IP address being the first transit private IP address is received, modify the destination IP address of the packet to the private IP address in the third network segment, and send the modified packet to the third VPC, where the router of the third VPC forwards the modified packet to the second VPC according to the third routing rule.

In a possible implementation of the second aspect, the first NAT rule is further used to indicate the NAT gateway to: bind a fourth network segment in the first VPC to a second EIP; when a packet from the fourth network segment and having a destination IP address being a second public IP address is received, modify a source IP address of the packet to the second EIP, and send the modified packet to the public network; and when a packet having a source IP address being the second public IP address and having a destination IP address being the second EIP is received, modify the destination IP address of the packet to a private IP address in the fourth network segment, and send the modified packet to the fourth network segment of the first VPC.

In a possible implementation of the second aspect, the first NAT rule is further used to indicate the NAT gateway to:
bind the fourth network segment in the first VPC to a second transit private IP address; when a packet from the fourth network segment and having a destination IP address being the private IP address in the second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the second transit private IP address to the private IP address in the fourth network segment, and send the modified packet to the fourth network segment of the first VPC.

In a possible implementation of the second aspect,wherein:
the gateway configuration module is further configured to set a remote access gateway in the second VPC, where the remote access gateway is provided with a preset private IP address in the second network segment of the second VPC; and
the gateway configuration module is further configured to set the remote access gateway to be connected to an on-premises internet data center.

According to a third aspect, this application provides a computing device cluster, including at least one computing device, where each computing device includes a processor and a memory.

The processor of the at least one computing device is configured to execute instructions stored in the memory of the at least one computing device, to cause the computing device cluster to perform the method according to any one of the first aspect or the possible implementations of the first aspect.

According to a fourth aspect, this application provides a computer program product including instructions. When the instructions are run by a computing device cluster, the computing device cluster is caused to perform the method according to any one of the first aspect or the possible implementations of the first aspect.

According to a fifth aspect, this application provides a computer-readable storage medium, including computer program instructions. When the computer program instructions are executed by a computing device cluster, the computing device cluster performs the method according to any one of the first aspect or the possible implementations of the first aspect.

### BRIEF DESCRIPTION OF DRAWINGS

To describe technical solutions in embodiments of the present invention more clearly, the following briefly describes accompanying drawings used in describing the embodiments. It is clear that the accompanying drawings in the following description show some embodiments of the present invention, and a person of ordinary skill in the art may still derive other drawings from these accompanying drawings without creative efforts.
FIG. 1 is a structural diagram of a system according to an embodiment of this application;
FIG. 2 is a flowchart of configuring a NAT gateway according to an embodiment of this application;
FIG. 3 is a structural diagram of another system according to an embodiment of this application;
FIG. 4 is a diagram of a logical structure of a cloud management platform according to an embodiment of this application;
FIG. 5 is a diagram of an apparatus structure of a computing device for implementing a cloud management platform function according to an embodiment of this application; and
FIG. 6 is a diagram of an apparatus structure of a computing device cluster for implementing a cloud management platform function according to an embodiment of this application.

### DESCRIPTION OF EMBODIMENTS

The following clearly and completely describes technical solutions in embodiments of the present invention with reference to accompanying drawings. It is clear that the described embodiments are merely some but not all embodiments of this application. All other embodiments obtained by a person of ordinary skill in the art based on embodiments of this application without creative efforts shall fall within the protection scope of this application.

"Embodiments" mentioned in this specification mean that specific features, structures, or characteristics described in combination with embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

On a cloud network, if a cloud instance (virtual machine or container) in a virtual private cloud (Virtual Private Cloud, VPC) or a server in an on-premises internet data center (INTERNET DATA CENTER, IDC) of a user that is connected to a VPC through a direct connection (DIRECT CONNECTION, DC)/virtual private network (Virtual Private Network, VPN) needs to access the Internet or provide a service for the Internet, and needs to be bound to an elastic IP address (Elastic IP, EIP). Since EIP resources are valuable, a NAT (Network Address Translation) gateway service is usually used so that a plurality of cloud hosts may share an EIP to access the Internet or provide a service for the Internet. A plurality of cloud hosts can also access the on-premises IDC or other VPCs by using an address translation capability of the NAT gateway service and a shared transit private IP address address. In addition, cloud hosts can provide services for private networks.

Based on an application scenario of network address translation, a NAT gateway service on the cloud network may be classified into a public NAT gateway and a private NAT gateway.

The public NAT gateway provides a capability of translation between a private IP address and an elastic IP address, and the capability is classified into two functions: SNAT and DNAT. According to a configured SNAT rule, a private IP address is translated into a public IP address, so that a plurality of cloud hosts in a VPC share an elastic IP to access the Internet. According to a configured DNAT rule, a private IP and port are mapped to a public IP and port, so that a plurality of cloud hosts in a VPC share an elastic IP to provide a service for the Internet.

The private NAT gateway provides a capability of translation between a private IP address and a transit IP address, and the capability is also classified into two functions: SNAT and DNAT. According to the configured SNAT rule, a private IP address is translated into a transit IP address, so that a plurality of cloud hosts in a private cloud share a transit IP address to access an external data center or other VPCs. According to the configured DNAT rule, a private IP and port are mapped to a transit IP and port, so that a plurality of cloud hosts in a VPC share the transit IP to provide a service for an external private network.

On the cloud network, the public NAT gateway and the private NAT gateway are deployed as two independent services and provide different services for customers. This service providing mode increases development costs and operation and maintenance costs of a cloud infrastructure provider. In addition, a single NAT gateway instance does not have a multi-egress capability. In a multi-egress scenario, a customer needs to perform an additional configuration. For example, (1) when different hosts in a same VPC of a customer need to access a public network and a private network, the customer needs to create a public NAT gateway and a private NAT gateway in the VPC, and configure a plurality of routes to direct different traffic to different NAT gateways; (2) when a same host in a same VPC of a customer needs to use different public IPs to access different Internet addresses or provide different services for different Internet addresses, the customer needs to create a plurality of public NAT gateway instances in the VPC, create different rules for each NAT gateway instance, and configure a plurality of routes for the virtual machine to direct traffic to different NAT gateways; (3) similarly, when a host in a same VPC of a customer needs to use different private IP addresses to access different IDCs or different VPCs or provide services for different private networks, the customer also needs to create a plurality of private NAT gateway instances and configure a plurality of routes; and (4) when hosts in an on-premises IDC or on a cloud access a VPC through other network elements, such as DC, CC, VPN, PEERING, or ER, to use a NAT function, if different IP addresses need to be used to access different destinations or provide different services for different addresses, a plurality of NAT gateways need to be created and a plurality of routes need to be configured in the VPC. All these increase configuration costs and management costs of the customer and increase a risk of errors caused by manual configuration.

The NAT gateway service uses SNAT to match a source address and translate the source address, and uses DNAT to match a destination address and translate the destination address. The NAT does not have an ACL capability. To implement an access control function, a customer needs to perform an additional configuration. For example, (1) when a host in a cloud of a customer wants to control access to a destination address when using SNAT or wants to control access to a source address when using DNAT, security groups need to be configured for the related cloud host; and (2) for other hosts that access a current VPC through cloud connections or other manners, related security configurations need to be performed on the other hosts. Access control configuration is complex and lacks centralized configuration, which increases configuration costs and management costs of the customer and security risks.

The NAT gateway on the cloud network is classified into two services due to different usage scenarios: a public NAT gateway service and a private NAT gateway service, and a single NAT gateway instance does not have a multi-egress capability. To reduce development costs and operation and maintenance costs of an infrastructure provider, and reduce configuration costs and management costs of the customer, in embodiments of the present invention, capabilities of the public NAT gateway and the private NAT gateway are fused.

The embodiments of the present invention provide a fused NAT gateway, which fuses a public NAT gateway function and a private NAT gateway function, and provide a fused function for a customer as a single cloud service, thereby reducing development costs and operation and maintenance costs of a cloud infrastructure provider. A single NAT gateway instance provides a multi-egress capability. For a cloud host in a same VPC, a customer only needs to create a NAT gateway instance, and configure a simple default route, thereby reducing configuration costs and management costs of the customer. In addition, the fused NAT gateway provides an access control (Access control, ACL) capability. An access control function is added to a source address and a destination address when a SNAT rule and a DNAT rule are matched. This implements centralized security control, simplifies a customer configuration, and improves NAT service experience of a customer.

The present invention is applied to a cloud network. A fused NAT gateway instance may provide, at the same time, a network address translation service for a cloud host in a VPC or a server in a local data center that accesses the VPC through a direct connection, a VPN, an enterprise router, or the like: (1) accessing the Internet or providing a service for the Internet by using a translated EIP; and (2) accessing a local data center or other VPCs through a translated transit private IP address.

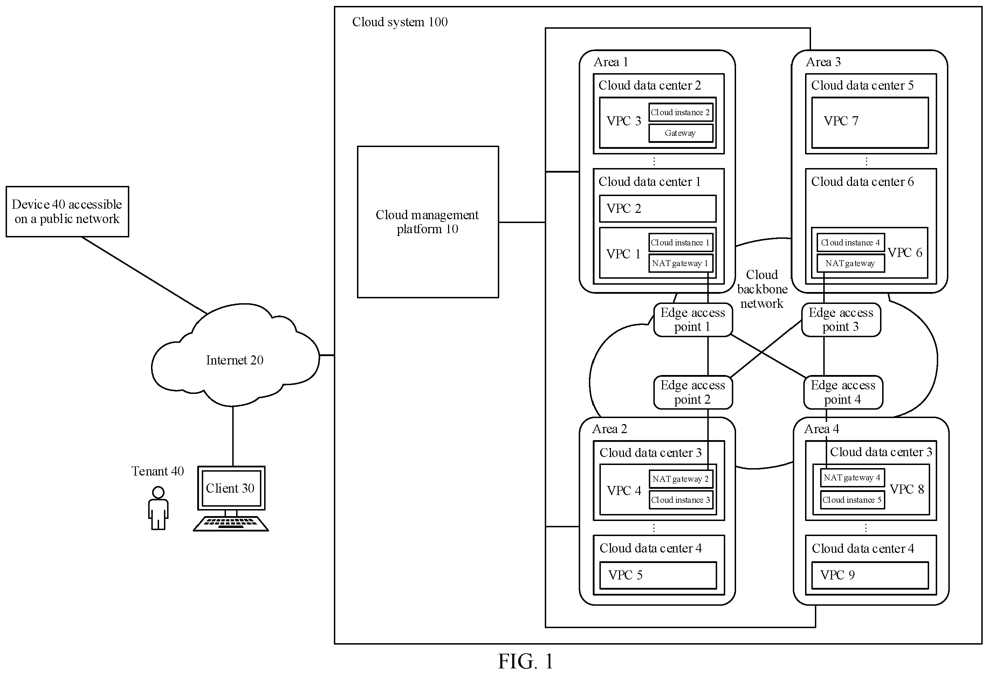

Refer to FIG. 1 below. FIG. 1 is a structural diagram of a system according to an embodiment of this application. As shown in FIG. 1, a cloud system 100, a client 30, and a device 40 access the Internet 20. The cloud system 100 includes a cloud management platform 10 and cloud data centers 1 to 6 disposed in a plurality of areas. At least one cloud data center is disposed in each area. The cloud data center includes a plurality of servers. A virtual network with tenant isolation is disposed in or between at least one server, for example, a VPC 1 shown in FIG. 1. A tenant 40 having a VPC 1 access right logs in to the cloud management platform 10 by using a client 30, and controls the cloud management platform 10 to create cloud instances in the VPC 1, for example, a cloud instance 1 and a cloud instance 2, where the cloud instance 1 and the cloud instance 2 specifically run in one or two servers of the cloud data center 1, where the cloud instance is, for example, a virtual machine or a container, and the tenant 40 may also log in to the cloud management platform 10 in a similar manner, and control the cloud management platform 10 to create a NAT gateway 1 in the VPC 1.

It should be noted that the cloud management platform 10 may be configured to manage a server in each cloud data center, and the cloud data centers in the plurality of regions may be referred to as network infrastructures.

Further, the plurality of regions are connected by using a cloud backbone network. The tenant 40 may create VPCs in different regions as required. VPCs across regions may be connected by using a backbone network, and VPCs in a same region may be connected by using a cloud connection service or a VPN service.

Each region corresponds to one edge access point on a backbone network, and the edge access point accesses the backbone network.

The NAT gateway 1 may access a public network through an EIP purchased by a tenant, for example, access a device 40 on a public network. In addition, the cloud instance 1 and the cloud instance 2 may access the public network through the NAT gateway 1.

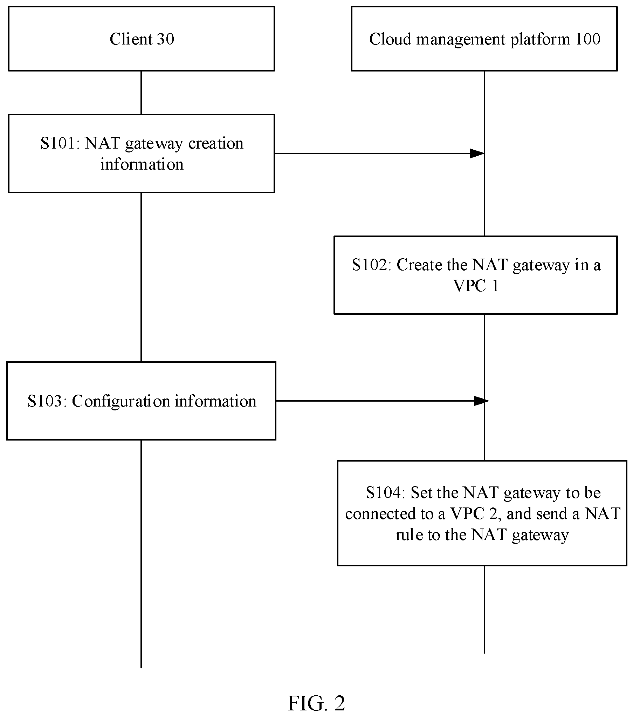

Refer to FIG. 2 below. FIG. 2 is a flowchart of configuring a NAT gateway according to an embodiment of this application. As shown in FIG. 2, a method for configuring a NAT gateway in this embodiment of this application includes the following steps.

This embodiment of this application provides a method for configuring a network address translation NAT gateway based on a public cloud service. The method is applied to a cloud management platform 10, the cloud management platform 10 is configured to manage a network infrastructure that provides the public cloud service, the network infrastructure includes a VPC 1 and a VPC 2, and the method includes the following steps.

Step S102: The cloud management platform 10 obtains NAT gateway creation information that is input by the tenant 40 by using the client 30, where the NAT gateway creation information carries an identifier of the VPC 1.

The identifier of the VPC 1 is, for example, a name of the VPC 1, or a number of the VPC 1 recorded on the cloud management platform 10.

Step S103: The cloud management platform 10 creates the NAT gateway 1 in the VPC 1 based on the NAT gateway creation information.

For example, the NAT gateway 1 may be implemented by using a virtual machine or a container. For example, the cloud management platform 10 creates a virtual machine in a server of the cloud data center 1, sets, for the virtual machine, network resources, computing resources, and storage resources required for implementing the NAT gateway 1, and sets a virtual network in which the virtual machine is located to the VPC 1.

Step S104: The cloud management platform 10 obtains configuration information that is input by the tenant 40 by using the client 30 and that is applied to the NAT gateway 1, where the configuration information includes an identifier of the VPC 2 and a NAT rule.

Step S105: The cloud management platform 10 sets, based on the identifier of the VPC 2, the NAT gateway 1 to be connected to the VPC 2, and sends a first NAT rule to the NAT gateway 1.

The first NAT rule is used to indicate the NAT gateway 1 to:
bind a first network segment in the VPC 1 to a first elastic IP address EIP; when a packet from the first network segment and having a destination IP address being a first public IP address is received, modify a source IP address of the packet to the first EIP, and send the modified packet to a public network; and when a packet having a source IP address being the first public IP address and having a destination IP address being the first EIP is received, modify the destination IP address of the packet to a private IP address in the first network segment, and send the modified packet to the first network segment of the VPC 1; and
bind the first network segment in the VPC 1 to a first transit private IP address; when a packet from the first network segment and having a destination IP address being a private IP address in a second network segment of the VPC 2 connected to the NAT gateway 1 is received, modify a source IP address of the packet to the first transit private IP address, and send the modified packet to the second network segment of the VPC 2; and modify a destination IP address of a packet from the second network segment and having a destination IP address being the first transit private IP address to the private IP address in the first network segment, and send the modified packet to the first network segment of the VPC 1.

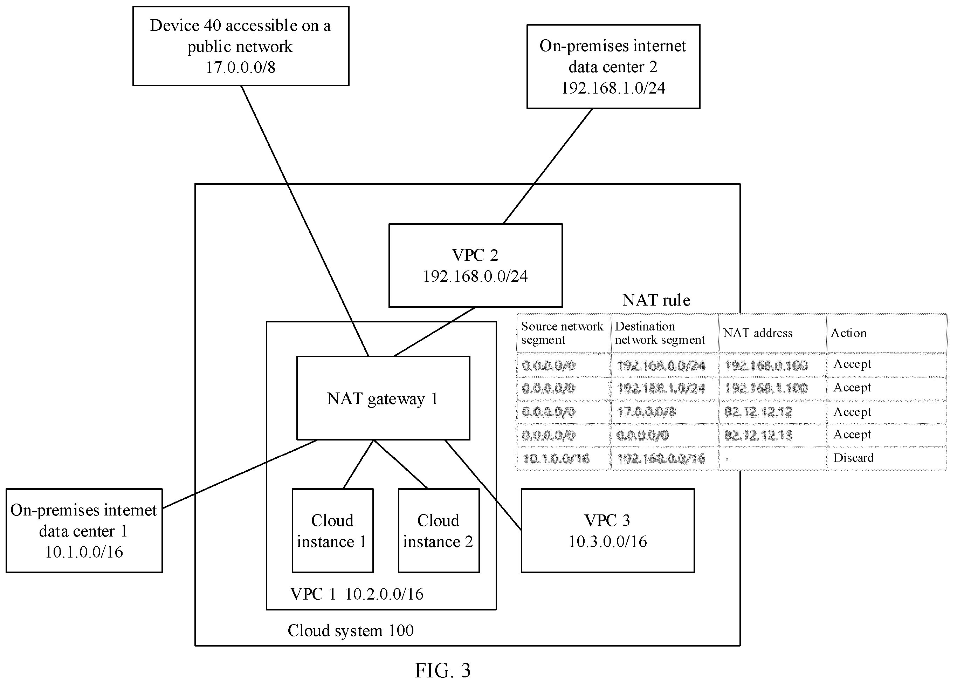

Specifically, reference may be made to FIG. 3. FIG. 3 is a structural diagram of another system according to an embodiment of this application. FIG. 3 is a logical diagram further abstracted from FIG. 1. As shown in FIG. 3, it is assumed that the first network segment is 10.2.0.0/16, the first EIP is 82.12.12.12, and the first public IP address is 17.0.0.1. In this case, the NAT gateway 1 processes, according to the first NAT rule, a packet that is from the first network segment 10.2.0.0/16 and that is sent by the cloud instance 1 or the cloud instance 2. If a destination IP address of the packet is the first public IP address 17.0.0.1, a source IP address of the packet is modified from a private IP address of the cloud instance 1 or 2 in the first network segment 10.2.0.0/16 to the first EIP 82.12.12.12, and the packet is sent to the Internet 20 (namely, the public network), and is routed to the device 40 based on the destination IP address of the packet by a routing device of the Internet 20. After receiving the packet, the device 40 responds, where a generated response packet has a destination IP address being the first EIP 82.12.12.12, and has a source IP address being the first public IP address 17.0.0.1. The response packet is routed to the NAT gateway 1 by the routing device in the Internet 20. The NAT gateway 1 modifies the destination IP address of the response packet to the private IP address of the cloud instance 1 or 2 in the first network segment 10.2.0.0/16, and sends the modified packet to the first network segment 10.2.0.0/16 of the VPC 1, so that the cloud instance 1 or 2 can obtain the response packet.

It should be noted that, the NAT gateway 1 may determine, based on a port mapping manner, whether the response packet belongs to the cloud instance 1 or the cloud instance 2. Based on the foregoing embodiment, details are as follows:
The first NAT rule is specifically used to indicate the NAT gateway 1 to:
when a first packet having a source IP address being a first private IP address of the first network segment and having a destination IP address being the first public IP address is received, modify the source IP address of the first packet from the first private IP address to the first EIP, modify a source port of the first packet from a first original port to a first allocated port, and send the modified first packet to the public network; and when a second packet having a source IP address being the first public IP address, having a destination IP address being the first EIP, and having a destination port being the first allocated port is received, modify the destination IP address of the second packet to the first private IP address, modify the destination port to the first original port, and send the modified second packet to the first private IP address of the VPC 1; and
when a third packet from a second private IP address of the first network segment and having a destination IP address being the first public IP address is received, modify a source IP address of the third packet from the second private IP address to the first EIP, modify a source port of the third packet from a second original port to a second allocated port, and send the modified third packet to the public network; and when a fourth packet having a source IP address being the first public IP address, having a destination IP address being the first EIP, and having a destination port being the second allocated port is received, modify the destination IP address of the fourth packet to the second private IP address, modify the destination port to the second original port, and send the modified fourth packet to the second private IP address of the VPC 1.

With reference to the foregoing example, the first allocated port and the second allocated port may be uniformly allocated and managed by the NAT gateway 1, and it is determined, based on the first allocated port, that the destination IP address of the response packet is the private IP address (for example, 10.2.0.1) of the cloud instance 1 in the first network segment, and it is determined, based on the second allocated port, that the destination IP address of the response packet is the private IP address (for example, 10.2.0.2) of the cloud instance 2 in the first network segment.

As shown in FIG. 3, the NAT gateway 1 may further be connected to the VPC 2.

The first NAT rule is specifically used to indicate the NAT gateway 1 to:
when a fifth packet from the first private IP address of the first network segment and having a destination IP address being a third private IP address of the second network segment of the VPC 2 connected to the NAT gateway 1 is received, modify a source IP address of the fifth packet from the first private IP address to the first transit private IP address, modify a source port of the fifth packet from a third original port to a third allocated port, and send the modified fifth packet to the third private IP address of the second network segment of the VPC 2; and when a sixth packet having a source IP address being the first public IP address, having a destination IP address being the first EIP, and having a destination port being the third allocated port is received, modify the destination IP address of the sixth packet to the first private IP address, modify the destination port to the third original port, and send the modified sixth packet to the first private IP address of the VPC 1; and
when a seventh packet from the second private IP address of the first network segment and having a destination IP address being the third private IP address of the second network segment of the VPC 2 connected to the NAT gateway 1 is received, modify a source IP address of the seventh packet from the second private IP address to the first transit private IP address, modify a source port of the seventh packet from a fourth original port to a fourth allocated port, and send the modified seventh packet to the third private IP address of the second network segment of the VPC 2; and when an eighth packet having a source IP address being the third private IP address, having a destination IP address being the first transit private IP address, and having a destination port being the fourth allocated port is received, modify the destination IP address of the eighth packet to the second private IP address, modify the destination port to the fourth original port, and send the modified eighth packet to the second private IP address of the first VPC.

The second network segment is, for example, 192.168.0.0/24 shown in FIG. 3.

Therefore, packets sent by the cloud instance 1 and the cloud instance 2 to the VPC 2 may also be processed by the NAT gateway 1 by using the first transit private IP address (for example, 192.168.0.100 shown in FIG. 3) as a source IP address to access the VPC 2, and it may be determined, in a port mapping manner, whether a response packet comes from the cloud instance 1 or the cloud instance 2.

Optionally, the VPC 2 may further establish a remote connection to an on-premises internet data center 2 (192.168.1.0/24), and the NAT gateway 1 may also set the NAT rule shown in FIG. 3: When a destination address is 192.168.1.0/24, a source IP address is modified to a second transit private IP address (for example, 192.168.1.100 shown in FIG. 3).

Correspondingly, a method for configuring the NAT gateway 1 further includes:
The cloud management platform 10 sets a remote access gateway in the VPC 2, where the remote access gateway is provided with a preset private IP address in the second network segment of the VPC 2.

The cloud management platform 10 sets the remote access gateway to be connected to an on-premises internet data center.

Therefore, the NAT gateway 1 may enable the cloud instance 1 and the cloud instance 2 to access, by using different transit private IP addresses, the VPC 2 connected to the NAT gateway 1, or a subnet of the on-premises internet data center 2 bridged by the VPC 2.

Optionally, in this embodiment of the present invention, the method for configuring the NAT gateway further includes:
The cloud management platform 10 sets the VPC 1 to establish a connection to a VPC 3.

The cloud management platform 10 sets a first routing rule in the VPC 3, where the first routing rule is used to indicate a router of the VPC 3 to forward, to the NAT gateway 1 in the VPC 1, a packet having a destination IP address being the first public IP address.

The cloud management platform 10 sets a second routing rule in the VPC 1, where the second routing rule is used to indicate a router of the VPC 1 to forward, to the VPC 2, a packet having a destination address being a third network segment in the VPC 3.

The cloud management platform 10 sends the second NAT rule to the NAT gateway 1, where the second NAT rule is used to indicate the NAT gateway 1 to:
bind the third network segment in the VPC 3 to the first EIP; when a packet from the third network segment and having a destination IP address being the first public IP address is received, modify a source IP address of the packet to the first EIP, and send the modified packet to the public network; and when a packet having a source IP address being the first public IP address and having a destination IP address being the first EIP is received, modify the destination IP address of the packet to a private IP address in the third network segment, and send the modified packet to the VPC 1, where the router of the VPC 1 forwards the modified packet to the VPC 2 according to the second routing rule.

The third network segment may be, for example, 10.3.0.0/16.

The configuration information further includes a third NAT rule, and the method further includes:
The cloud management platform 10 sets a third routing rule in the VPC 3, where the third routing rule is used to indicate the router of the VPC 3 to forward, to the NAT gateway 1 in the VPC 1, a packet having a destination IP address being the second network segment of the VPC 2 connected to the NAT gateway 1.

The cloud management platform 10 sets a fourth routing rule in the VPC 1, where the fourth routing rule is used to indicate a router of the VPC 1 to forward, to the VPC 3, a packet having a destination address being a third network segment in the VPC 3.

The cloud management platform 10 sends the third NAT rule to the NAT gateway 1, where the third NAT rule is used to indicate the NAT gateway 1 to:
bind the third network segment in the VPC 3 to the first transit private IP address; when a packet from the third network segment and having a destination IP address being the private IP address in the second network segment of the VPC 2 connected to the NAT gateway 1 is received, modify a source IP address of the packet to the first transit private IP address, and send the modified packet to the VPC 2; and when a packet having a source IP address being the private IP address in the second network segment of the VPC 2 and having a destination IP address being the first transit private IP address is received, modify the destination IP address of the packet to the private IP address in the third network segment, and send the modified packet to the VPC 3, where the router of the VPC 3 forwards the modified packet to the VPC 2 according to the third routing rule.

Optionally, the first NAT rule is further used to indicate the NAT gateway 1 to:
bind a fourth network segment in the VPC 1 to a second EIP; when a packet from the fourth network segment and having a destination IP address being a second public IP address is received, modify a source IP address of the packet to the second EIP, and send the modified packet to the public network; and when a packet having a source IP address being the second public IP address and having a destination IP address being the second EIP is received, modify the destination IP address of the packet to a private IP address in the fourth network segment, and send the modified packet to the fourth network segment of the VPC 1; and
bind the fourth network segment in the VPC 1 to a second transit private IP address; when a packet from the fourth network segment and having a destination IP address being the private IP address in the second network segment of the VPC 2 connected to the NAT gateway 1 is received, modify a source IP address of the packet to the first transit private IP address, and send the modified packet to the second network segment of the VPC 2; and modify a destination IP address of a packet from the second network segment and having a destination IP address being the second transit private IP address to the private IP address in the fourth network segment, and send the modified packet to the fourth network segment of the VPC 1.

In this embodiment, it is assumed that two network segments are set in the VPC 1, including the first network segment and the fourth network segment described above. The first network segment is not set to 10.2.0.0/16, but is set to a subnet segment 10.2.1.0/24 in 10.2.0.0/16, and the fourth network segment is included, where the fourth network segment is another subnet segment 10.2.2.0/24 in 10.2.0.0/16.

The NAT gateway 1 may set the first network segment to bind to the first EIP 82.12.12.12, and set the fourth network segment to bind to the second EIP 82.12.12.12, so that a cloud instance in the first network segment can access the public network through the first EIP, and a cloud instance in the fourth network segment can access the public network through the second EIP.

Similarly, the NAT gateway 1 may set the first network segment to bind to the first transit private IP address, and set the fourth network segment to bind to the second transit IP, so that the cloud instance in the first network segment can access the VPC 2 through the first transit private IP address, and the cloud instance in the fourth network segment can access the VPC 2 through the second transit private IP address.

Further, the NAT gateway 1 may further be remotely connected to the on-premises internet data center 1, and configure whether a packet of the on-premises internet data center 1 can access the VPC 2.

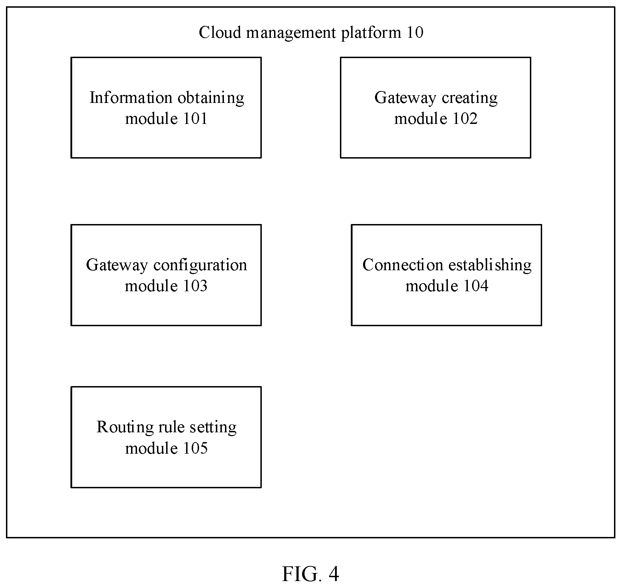

As shown in FIG. 4, a cloud management platform 10 includes:
an information obtaining module 101, configured to obtain NAT gateway 1 creation information that is input by a tenant, where the NAT gateway creation information carries an identifier of the VPC 1;
a gateway creating module 102, configured to create the NAT gateway in the VPC 1 based on the NAT gateway creation information, where
the information obtaining module 101 is further configured to obtain configuration information that is input by the tenant and applied to the NAT gateway, where the configuration information includes an identifier of the VPC 2 and a first NAT rule; and
a gateway configuration module 103, configured to set, based on the identifier of the VPC 2, the NAT gateway to be connected to the VPC 2, and send the first NAT rule to the NAT gateway, where the first NAT rule is used to indicate the NAT gateway to:
   bind a first network segment in the VPC 1 to a first elastic IP address EIP; when a packet from the first network segment and having a destination IP address being a first public IP address is received, modify a source IP address of the packet to the first EIP, and send the modified packet to a public network; and when a packet having a source IP address being the first public IP address and having a destination IP address being the first EIP is received, modify the destination IP address of the packet to a private IP address in the first network segment, and send the modified packet to the first network segment of the VPC 1; and
   bind the first network segment in the VPC 1 to a first transit private IP address; when a packet from the first network segment and having a destination IP address being a private IP address in a second network segment of the VPC 2 connected to the NAT gateway is received, modify a source IP address of the packet to the first transit private IP address, and send the modified packet to the second network segment of the VPC 2; and modify a destination IP address of a packet from the second network segment and having a destination IP address being the first transit private IP address to the private IP address in the first network segment, and send the modified packet to the first network segment of the VPC 1.

The first NAT rule is specifically used to indicate the NAT gateway to:
when a first packet having a source IP address being a first private IP address of the first network segment and having a destination IP address being the first public IP address is received, modify the source IP address of the first packet from the first private IP address to the first EIP, modify a source port of the first packet from a first original port to a first allocated port, and send the modified first packet to the public network; and when a second packet having a source IP address being the first public IP address, having a destination IP address being the first EIP, and having a destination port being the first allocated port is received, modify the destination IP address of the second packet to the first private IP address, modify the destination port to the first original port, and send the modified second packet to the first private IP address of the VPC 1; and
when a third packet from a second private IP address of the first network segment and having a destination IP address being the first public IP address is received, modify a source IP address of the third packet from the second private IP address to the first EIP, modify a source port of the third packet from a second original port to a second allocated port, and send the modified third packet to the public network; and when a fourth packet having a source IP address being the first public IP address, having a destination IP address being the first EIP, and having a destination port being the second allocated port is received, modify the destination IP address of the fourth packet to the second private IP address, modify the destination port to the second original port, and send the modified fourth packet to the second private IP address of the VPC 1.

The first NAT rule is specifically used to indicate the NAT gateway to:
when a fifth packet from the first private IP address of the first network segment and having a destination IP address being a third private IP address of the second network segment of the VPC 2 connected to the NAT gateway is received, modify a source IP address of the fifth packet from the first private IP address to the first transit private IP address, modify a source port of the fifth packet from a third original port to a third allocated port, and send the modified fifth packet to the third private IP address of the second network segment of the VPC 2; and when a sixth packet having a source IP address being the first public IP address, having a destination IP address being the first EIP, and having a destination port being the third allocated port is received, modify the destination IP address of the sixth packet to the first private IP address, modify the destination port to the third original port, and send the modified sixth packet to the first private IP address of the VPC 1; and
when a seventh packet from the second private IP address of the first network segment and having a destination IP address being the third private IP address of the second network segment of the VPC 2 connected to the NAT gateway is received, modify a source IP address of the seventh packet from the second private IP address to the first transit private IP address, modify a source port of the seventh packet from a fourth original port to a fourth allocated port, and send the modified seventh packet to the third private IP address of the second network segment of the VPC 2; and when an eighth packet having a source IP address being the third private IP address, having a destination IP address being the first transit private IP address, and having a destination port being the fourth allocated port is received, modify the destination IP address of the eighth packet to the second private IP address, modify the destination port to the fourth original port, and send the modified eighth packet to the second private IP address of the VPC 1.

Optionally, the configuration information further includes a second NAT rule, and the cloud management platform 10 further includes:
a connection establishing module 104, configured to set the VPC 1 to establish a connection to a VPC 3; and
a routing rule setting module 105, configured to set a first routing rule in the VPC 3, where the first routing rule is used to indicate a router of the VPC 3 to forward, to the NAT gateway in the VPC 1, a packet having a destination IP address being the first public IP address; and set a second routing rule in the VPC 1, where the second routing rule is used to indicate a router of the VPC 1 to forward, to the VPC 2, a packet having a destination address being a third network segment in the VPC 3, where
the gateway configuration module 103 is configured to send the second NAT rule to the NAT gateway, where the second NAT rule is used to indicate the NAT gateway to:
   bind the third network segment in the VPC 3 to the first EIP; when a packet from the third network segment and having a destination IP address being the first public IP address is received, modify a source IP address of the packet to the first EIP, and send the modified packet to the public network; and when a packet having a source IP address being the first public IP address and having a destination IP address being the first EIP is received, modify the destination IP address of the packet to a private IP address in the third network segment, and send the modified packet to the VPC 1, where the router of the VPC 1 forwards the modified packet to the VPC 2 according to the second routing rule.

Optionally, the configuration information further includes a third NAT rule.

The routing rule setting module 105 is configured to set a third routing rule in the VPC 3, where the third routing rule is used to indicate the router of the VPC 3 to forward, to the NAT gateway in the VPC 1, a packet having a destination IP address being the second network segment of the VPC 2 connected to the NAT gateway.

The routing rule setting module 105 is further configured to set a fourth routing rule in the VPC 1, where the fourth routing rule is used to indicate a router of the VPC 1 to forward, to the VPC 3, a packet having a destination address being a third network segment in the VPC 3.

The gateway configuration module 103 is configured to send the third NAT rule to the NAT gateway, where the third NAT rule is used to indicate the NAT gateway to:
bind the third network segment in the VPC 3 to the first transit private IP address; when a packet from the third network segment and having a destination IP address being the private IP address in the second network segment of the VPC 2 connected to the NAT gateway is received, modify a source IP address of the packet to the first transit private IP address, and send the modified packet to the VPC 2; and when a packet having a source IP address being the private IP address in the second network segment of the VPC 2 and having a destination IP address being the first transit private IP address is received, modify the destination IP address of the packet to the private IP address in the third network segment, and send the modified packet to the VPC 3, where the router of the VPC 3 forwards the modified packet to the VPC 2 according to the third routing rule.

The first NAT rule is further used to indicate the NAT gateway to: bind a fourth network segment in the VPC 1 to a second EIP; when a packet from the fourth network segment and having a destination IP address being a second public IP address is received, modify a source IP address of the packet to the second EIP, and send the modified packet to the public network; and when a packet having a source IP address being the second public IP address and having a destination IP address being the second EIP is received, modify the destination IP address of the packet to a private IP address in the fourth network segment, and send the modified packet to the fourth network segment of the VPC 1.

The first NAT rule is further used to indicate the NAT gateway to:
bind the fourth network segment in the VPC 1 to a second transit private IP address; when a packet from the fourth network segment and having a destination IP address being the private IP address in the second network segment of the VPC 2 connected to the NAT gateway is received, modify a source IP address of the packet to the first transit private IP address, and send the modified packet to the second network segment of the VPC 2; and modify a destination IP address of a packet from the second network segment and having a destination IP address being the second transit private IP address to the private IP address in the fourth network segment, and send the modified packet to the fourth network segment of the VPC 1.

The gateway configuration module 103 is further configured to set a remote access gateway in the VPC 2, where the remote access gateway is provided with a preset private IP address in the second network segment of the VPC 2.

The gateway configuration module 103 is further configured to set the remote access gateway to be connected to an on-premises internet data center.

It should be noted that the foregoing modules may be configured to perform any step of the method shown in FIG. 2. This is not limited in this embodiment of the present invention.

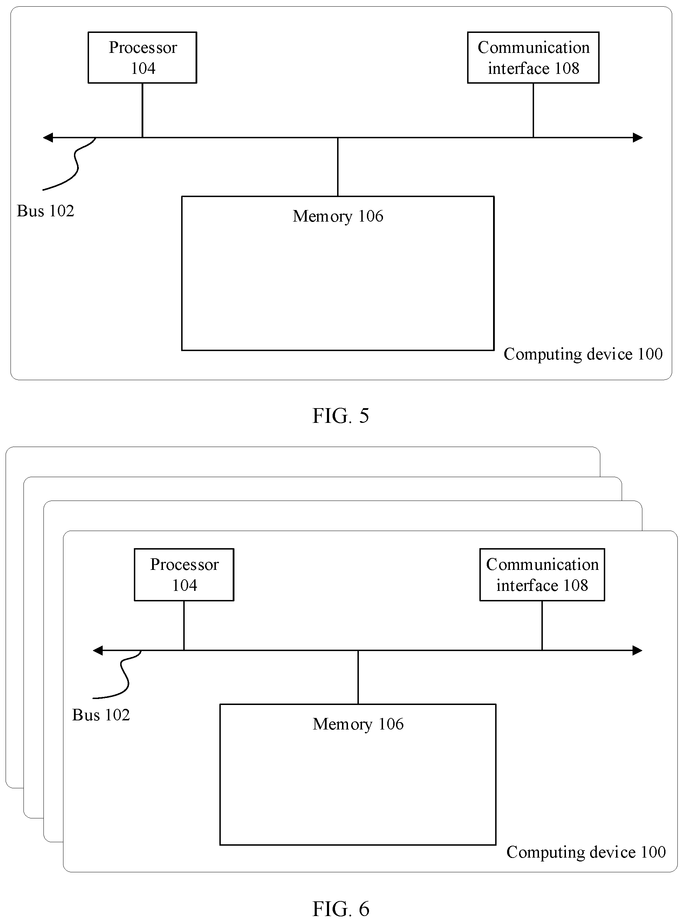

As shown in FIG. 5, this application provides a computing device, including a processor and a memory. The processor of the computing device is configured to execute instructions stored in the memory of the computing device, to cause a computing device cluster to perform the method performed by the cloud management platform 10 in the foregoing embodiment.

As shown in FIG. 6, this application provides a computing device cluster, including at least one computing device, where each computing device includes a processor and a memory. The processor of the at least one computing device is configured to execute instructions stored in the memory of the at least one computing device, to cause the computing device cluster to perform the method performed by the cloud management platform 10 in the foregoing embodiment.

This application provides a computer program product including instructions. When the instructions are run by a computing device cluster, the computing device cluster is caused to perform the method performed by the cloud management platform 10 in the foregoing embodiment.

This application provides a computer-readable storage medium, including computer program instructions. When the computer program instructions are executed by a computing device cluster, the computing device cluster performs the method performed by the cloud management platform 10 in the foregoing embodiment.

In the foregoing embodiments, the description of each embodiment has respective focuses. For a part that is not described in detail in an embodiment, reference may be made to related descriptions in other embodiments.

It should be noted that, for brief description, the foregoing method embodiments are represented as a series of action combinations. However, a person skilled in the art should understand that this application is not limited to the described action sequence, because some steps may be performed in other sequences or simultaneously according to this application. It should be further appreciated by a person skilled in the art that embodiments described in this specification all belong to example embodiments, and the related actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

## Claims

1. A method for configuring a network address translation NAT gateway based on a public cloud service, wherein the method is applied to a cloud management platform, the cloud management platform is configured to manage a network infrastructure that provides the public cloud service, the network infrastructure comprises a first VPC and a second VPC, and the method comprises:
obtaining, by the cloud management platform, NAT gateway creation information that is input by a tenant, wherein the NAT gateway creation information carries an identifier of the first VPC;
creating, by the cloud management platform, the NAT gateway in the first VPC based on the NAT gateway creation information;
obtaining, by the cloud management platform, configuration information that is input by the tenant and applied to the NAT gateway, wherein the configuration information comprises an identifier of the second VPC and a first NAT rule; and
setting, by the cloud management platform based on the identifier of the second VPC, the NAT gateway to be connected to the second VPC, and sending the first NAT rule to the NAT gateway, wherein the first NAT rule is used to indicate the NAT gateway to:
bind a first network segment in the first VPC to a first elastic public IP address EIP; when a packet from the first network segment and having a destination IP address being a first public IP address is received, modify a source IP address of the packet to the first EIP, and send the modified packet to a public network; and when a packet having a source IP address being the first public IP address and having a destination IP address being the first EIP is received, modify the destination IP address of the packet to a private IP address in the first network segment, and send the modified packet to the first network segment of the first VPC; and
bind the first network segment in the first VPC to a first transit private IP address; when a packet from the first network segment and having a destination IP address being a private IP address in a second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the first transit private IP address to the private IP address in the first network segment, and send the modified packet to the first network segment of the first VPC.

2. The method according to claim 1, wherein the first NAT rule is specifically used to indicate the NAT gateway to:
when a first packet having a source IP address being a first private IP address of the first network segment and having a destination IP address being the first public IP address is received, modify the source IP address of the first packet from the first private IP address to the first EIP, modify a source port of the first packet from a first original port to a first allocated port, and send the modified first packet to the public network; and when a second packet having a source IP address being the first public IP address, having a destination IP address being the first EIP, and having a destination port being the first allocated port is received, modify the destination IP address of the second packet to the first private IP address, modify the destination port to the first original port, and send the modified second packet to the first private IP address of the first VPC; and
when a third packet from a second private IP address of the first network segment and having a destination IP address being the first public IP address is received, modify a source IP address of the third packet from the second private IP address to the first EIP, modify a source port of the third packet from a second original port to a second allocated port, and send the modified third packet to the public network; and when a fourth packet having a source IP address being the first public IP address, having a destination IP address being the first EIP, and having a destination port being the second allocated port is received, modify the destination IP address of the fourth packet to the second private IP address, modify the destination port to the second original port, and send the modified fourth packet to the second private IP address of the first VPC.

3. The method according to claim 1 or 2, wherein the first NAT rule is specifically used to indicate the NAT gateway to:
when a fifth packet from the first private IP address of the first network segment and having a destination IP address being a third private IP address of the second network segment of the second VPC connected to the NAT gateway is received, modify a source IP address of the fifth packet from the first private IP address to the first transit private IP address, modify a source port of the fifth packet from a third original port to a third allocated port, and send the modified fifth packet to the third private IP address of the second network segment of the second VPC; and when a sixth packet having a source IP address being the first public IP address, having a destination IP address being the first EIP, and having a destination port being the third allocated port is received, modify the destination IP address of the sixth packet to the first private IP address, modify the destination port to the third original port, and send the modified sixth packet to the first private IP address of the first VPC; and
when a seventh packet from the second private IP address of the first network segment and having a destination IP address being the third private IP address of the second network segment of the second VPC connected to the NAT gateway is received, modify a source IP address of the seventh packet from the second private IP address to the first transit private IP address, modify a source port of the seventh packet from a fourth original port to a fourth allocated port, and send the modified seventh packet to the third private IP address of the second network segment of the second VPC; and when an eighth packet having a source IP address being the third private IP address, having a destination IP address being the first transit private IP address, and having a destination port being the fourth allocated port is received, modify the destination IP address of the eighth packet to the second private IP address, modify the destination port to the fourth original port, and send the modified eighth packet to the second private IP address of the first VPC.

4. The method according to any one of claims 1 to 3, wherein the configuration information further comprises a second NAT rule, and the method further comprises:
setting, by the cloud management platform, the first VPC to establish a connection to a third VPC;
setting, by the cloud management platform, a first routing rule in the third VPC, wherein the first routing rule is used to indicate a router of the third VPC to forward, to the NAT gateway in the first VPC, a packet having a destination IP address being the first public IP address;
setting, by the cloud management platform, a second routing rule in the first VPC, wherein the second routing rule is used to indicate a router of the first VPC to forward, to the second VPC, a packet having a destination address being a third network segment in the third VPC; and
sending, by the cloud management platform, the second NAT rule to the NAT gateway, wherein the second NAT rule is used to indicate the NAT gateway to:
bind the third network segment in the third VPC to the first EIP; when a packet from the third network segment and having a destination IP address being the first public IP address is received, modify a source IP address of the packet to the first EIP, and send the modified packet to the public network; and when a packet having a source IP address being the first public IP address and having a destination IP address being the first EIP is received, modify the destination IP address of the packet to a private IP address in the third network segment, and send the modified packet to the first VPC, wherein the router of the first VPC forwards the modified packet to the second VPC according to the second routing rule.

5. The method according to claim 4, wherein the configuration information further comprises a third NAT rule, and the method further comprises:
setting, by the cloud management platform, a third routing rule in the third VPC, wherein the third routing rule is used to indicate the router of the third VPC to forward, to the NAT gateway in the first VPC, a packet having a destination IP address being the second network segment of the second VPC connected to the NAT gateway;
setting, by the cloud management platform, a fourth routing rule in the first VPC, wherein the fourth routing rule is used to indicate a router of the first VPC to forward, to the third VPC, a packet having a destination address being a third network segment in the third VPC; and
sending, by the cloud management platform, the third NAT rule to the NAT gateway, wherein the third NAT rule is used to indicate the NAT gateway to:
bind the third network segment in the third VPC to the first transit private IP address; when a packet from the third network segment and having a destination IP address being the private IP address in the second network segment of the second VPC connected to the NAT gateway is received, modify a source IP address of the packet to the first transit private IP address, and send the modified packet to the second VPC; and when a packet having a source IP address being the private IP address in the second network segment of the second VPC and having a destination IP address being the first transit private IP address is received, modify the destination IP address of the packet to the private IP address in the third network segment, and send the modified packet to the third VPC, wherein the router of the third VPC forwards the modified packet to the second VPC according to the third routing rule.

6. The method according to any one of claims 1 to 5, wherein
the first NAT rule is further used to indicate the NAT gateway to:
bind a fourth network segment in the first VPC to a second EIP; when a packet from the fourth network segment and having a destination IP address being a second public IP address is received, modify a source IP address of the packet to the second EIP, and send the modified packet to the public network; and when a packet having a source IP address being the second public IP address and having a destination IP address being the second EIP is received, modify the destination IP address of the packet to a private IP address in the fourth network segment, and send the modified packet to the fourth network segment of the first VPC.

7. The method according to claim 6, wherein
the first NAT rule is further used to indicate the NAT gateway to:
bind the fourth network segment in the first VPC to a second transit private IP address; when a packet from the fourth network segment and having a destination IP address being the private IP address in the second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the second transit private IP address to the private IP address in the fourth network segment, and send the modified packet to the fourth network segment of the first VPC.

8. The method according to any one of claims 1 to 7, wherein the method further comprises:
setting, by the cloud management platform, a remote access gateway in the second VPC, wherein the remote access gateway is provided with a preset private IP address in the second network segment of the second VPC; and
setting, by the cloud management platform, the remote access gateway to be connected to an on-premises internet data center.

9. A cloud management platform, wherein the cloud management platform is configured to manage a network infrastructure that provides a public cloud service, the network infrastructure comprises a first VPC and a second VPC, and the cloud management platform comprises:
an information obtaining module, configured to obtain NAT gateway creation information that is input by a tenant, wherein the NAT gateway creation information carries an identifier of the first VPC;
a gateway creating module, configured to create the NAT gateway in the first VPC based on the NAT gateway creation information, wherein
the information obtaining module is further configured to obtain configuration information that is input by the tenant and applied to the NAT gateway, wherein the configuration information comprises an identifier of the second VPC and a first NAT rule; and
a gateway configuration module, configured to set, based on the identifier of the second VPC, the NAT gateway to be connected to the second VPC, and send the first NAT rule to the NAT gateway, wherein the first NAT rule is used to indicate the NAT gateway to:
bind a first network segment in the first VPC to a first elastic IP address EIP; when a packet from the first network segment and having a destination IP address being a first public IP address is received, modify a source IP address of the packet to the first EIP, and send the modified packet to a public network; and when a packet having a source IP address being the first public IP address and having a destination IP address being the first EIP is received, modify the destination IP address of the packet to a private IP address in the first network segment, and send the modified packet to the first network segment of the first VPC; and
bind the first network segment in the first VPC to a first transit private IP address; when a packet from the first network segment and having a destination IP address being a private IP address in a second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the first transit private IP address to the private IP address in the first network segment, and send the modified packet to the first network segment of the first VPC.

10. The cloud management platform according to claim 9, wherein the first NAT rule is specifically used to indicate the NAT gateway to:
when a first packet having a source IP address being a first private IP address of the first network segment and having a destination IP address being the first public IP address is received, modify the source IP address of the first packet from the first private IP address to the first EIP, modify a source port of the first packet from a first original port to a first allocated port, and send the modified first packet to the public network; and when a second packet having a source IP address being the first public IP address, having a destination IP address being the first EIP, and having a destination port being the first allocated port is received, modify the destination IP address of the second packet to the first private IP address, modify the destination port to the first original port, and send the modified second packet to the first private IP address of the first VPC; and
when a third packet from a second private IP address of the first network segment and having a destination IP address being the first public IP address is received, modify a source IP address of the third packet from the second private IP address to the first EIP, modify a source port of the third packet from a second original port to a second allocated port, and send the modified third packet to the public network; and when a fourth packet having a source IP address being the first public IP address, having a destination IP address being the first EIP, and having a destination port being the second allocated port is received, modify the destination IP address of the fourth packet to the second private IP address, modify the destination port to the second original port, and send the modified fourth packet to the second private IP address of the first VPC.

11. The cloud management platform according to claim 9 or 10, wherein the first NAT rule is specifically used to indicate the NAT gateway to:
when a fifth packet from the first private IP address of the first network segment and having a destination IP address being a third private IP address of the second network segment of the second VPC connected to the NAT gateway is received, modify a source IP address of the fifth packet from the first private IP address to the first transit private IP address, modify a source port of the fifth packet from a third original port to a third allocated port, and send the modified fifth packet to the third private IP address of the second network segment of the second VPC; and when a sixth packet having a source IP address being the first public IP address, having a destination IP address being the first EIP, and having a destination port being the third allocated port is received, modify the destination IP address of the sixth packet to the first private IP address, modify the destination port to the third original port, and send the modified sixth packet to the first private IP address of the first VPC; and
when a seventh packet from the second private IP address of the first network segment and having a destination IP address being the third private IP address of the second network segment of the second VPC connected to the NAT gateway is received, modify a source IP address of the seventh packet from the second private IP address to the first transit private IP address, modify a source port of the seventh packet from a fourth original port to a fourth allocated port, and send the modified seventh packet to the third private IP address of the second network segment of the second VPC; and when an eighth packet having a source IP address being the third private IP address, having a destination IP address being the first transit private IP address, and having a destination port being the fourth allocated port is received, modify the destination IP address of the eighth packet to the second private IP address, modify the destination port to the fourth original port, and send the modified eighth packet to the second private IP address of the first VPC.

12. The cloud management platform according to any one of claims 9 to 11, wherein the configuration information further comprises a second NAT rule, and the cloud management platform further comprises:
a connection establishing module, configured to set the first VPC to establish a connection to a third VPC; and
a routing rule setting module, configured to set a first routing rule in the third VPC, wherein the first routing rule is used to indicate a router of the third VPC to forward, to the NAT gateway in the first VPC, a packet having a destination IP address being the first public IP address; and set a second routing rule in the first VPC, wherein the second routing rule is used to indicate a router of the first VPC to forward, to the second VPC, a packet having a destination address being a third network segment in the third VPC, wherein
the gateway configuration module is configured to send the second NAT rule to the NAT gateway, wherein the second NAT rule is used to indicate the NAT gateway to:
bind the third network segment in the third VPC to the first EIP; when a packet from the third network segment and having a destination IP address being the first public IP address is received, modify a source IP address of the packet to the first EIP, and send the modified packet to the public network; and when a packet having a source IP address being the first public IP address and having a destination IP address being the first EIP is received, modify the destination IP address of the packet to a private IP address in the third network segment, and send the modified packet to the first VPC, wherein the router of the first VPC forwards the modified packet to the second VPC according to the second routing rule.

13. The cloud management platform according to claim 12, wherein the configuration information further comprises a third NAT rule;
the routing rule setting module is configured to set a third routing rule in the third VPC, wherein the third routing rule is used to indicate the router of the third VPC to forward, to the NAT gateway in the first VPC, a packet having a destination IP address being the second network segment of the second VPC connected to the NAT gateway;
the routing rule setting module is further configured to set a fourth routing rule in the first VPC, wherein the fourth routing rule is used to indicate a router of the first VPC to forward, to the third VPC, a packet having a destination address being a third network segment in the third VPC; and
the gateway configuration module is configured to send the third NAT rule to the NAT gateway, wherein the third NAT rule is used to indicate the NAT gateway to:
bind the third network segment in the third VPC to the first transit private IP address; when a packet from the third network segment and having a destination IP address being the private IP address in the second network segment of the second VPC connected to the NAT gateway is received, modify a source IP address of the packet to the first transit private IP address, and send the modified packet to the second VPC; and when a packet having a source IP address being the private IP address in the second network segment of the second VPC and having a destination IP address being the first transit private IP address is received, modify the destination IP address of the packet to the private IP address in the third network segment, and send the modified packet to the third VPC, wherein the router of the third VPC forwards the modified packet to the second VPC according to the third routing rule.

14. The cloud management platform according to any one of claims 9 to 13, wherein
the first NAT rule is further used to indicate the NAT gateway to:
bind a fourth network segment in the first VPC to a second EIP; when a packet from the fourth network segment and having a destination IP address being a second public IP address is received, modify a source IP address of the packet to the second EIP, and send the modified packet to the public network; and when a packet having a source IP address being the second public IP address and having a destination IP address being the second EIP is received, modify the destination IP address of the packet to a private IP address in the fourth network segment, and send the modified packet to the fourth network segment of the first VPC.

15. The cloud management platform according to claim 14, wherein
the first NAT rule is further used to indicate the NAT gateway to:
bind the fourth network segment in the first VPC to a second transit private IP address; when a packet from the fourth network segment and having a destination IP address being the private IP address in the second network segment of the second VPC connected to the NAT gateway is received, modify a source IP address of the packet to the first transit private IP address, and send the modified packet to the second network segment of the second VPC; and modify a destination IP address of a packet from the second network segment and having a destination IP address being the second transit private IP address to the private IP address in the fourth network segment, and send the modified packet to the fourth network segment of the first VPC.

16. The cloud management platform according to any one of claims 9 to 15, wherein
the gateway configuration module is further configured to set a remote access gateway in the second VPC, wherein the remote access gateway is provided with a preset private IP address in the second network segment of the second VPC; and
the gateway configuration module is further configured to set the remote access gateway to be connected to an on-premises internet data center.

17. A computing device cluster, comprising at least one computing device, wherein each computing device comprises a processor and a memory; and
the processor of the at least one computing device is configured to execute instructions stored in the memory of the at least one computing device, to cause the computing device cluster to perform the method according to any one of claims 1 to 8.

18. A computer program product comprising instructions, wherein when the instructions are run by a computing device cluster, the computing device cluster is caused to perform the method according to any one of claims 1 to 8.

19. A computer-readable storage medium, comprising computer program instructions, wherein when the computer program instructions are executed by a computing device cluster, the computing device cluster performs the method according to any one of claims 1 to 8.
